# EUROPEAN PATENT SPECIFICATION

(11) **EP 2 501 600 B1**
(45) Date of publication and mention of the grant of the patent: **29.04.2020**
(21) Application number: 10831878.3
(22) Date of filing: 18.11.2010
(51) Int. Cl.: B61H 13/34, B60T 17/22

(54) **BRAKE INDICATOR**
BREMSANZEIGE
INDICATEUR DE FREIN

(30) Priority: 20.11.2009 SE 0950885; 10.12.2009 US 285364 P
(43) Date of publication of application: 26.09.2012
(73) Proprietor: Faiveley Transport Nordic AB, 261 24 Landskrona (SE)
(72) Inventor: ARNELL, Andreas, S-257 32 Rydebäck (SE); BLENNOW, Fredrik, S-237 31 Bjärred (SE)
(74) Representative: Ström & Gulliksson AB
(86) International application number: PCT/SE2010/051272
(87) International publication number: WO 2011/062552

(56) References cited:
- EP-A1- 0 066 105
- WO-A1-02/057122
- DE-A1- 19 517 830
- DE-A1-102006 013 216
- DE-U1- 8 425 111
- FR-A1- 2 889 143
- GB-A- 713 324
- GB-A- 2 415 023
- JP-A- 59 011 935
- JP-A- 60 025 841
- US-A- 6 082 502
- US-A- 6 082 502
- US-A1- 2004 129 508
- US-A1- 2004 129 508
- US-A1- 2007 151 401
- US-A1- 2008 129 480

## Description

### Technical Field

This invention pertains in general to the field of brake indicators for rail vehicles, and in particular to a parking brake indicator for a rail vehicle, such as a train.

### Background

In rail vehicles it is important to indicate to the driver or to the rail vehicle personnel when the parking brake is on or off. This is to prevent the rail vehicle from moving unintentionally while being parked. Some of the current parking brake indicators for rail vehicles visually indicate the displacement between a first non braking position and a second assumed braking position of the braking rod applying pressure on the brake blocks. Some rail vehicles are equipped with brake blocks that are arranged to move along rail vehicle wheel, depending on the load of the rail vehicle. Hence, when the vehicle is fully loaded the brake blocks are situated towards the lowermost portion of the wheel, and when the vehicle is unloaded the brake blocks are situated more towards the middle or uppermost portion of the wheels. Background art is reflected for instance in US-B-6,082,502 which discloses a brake system indicator.

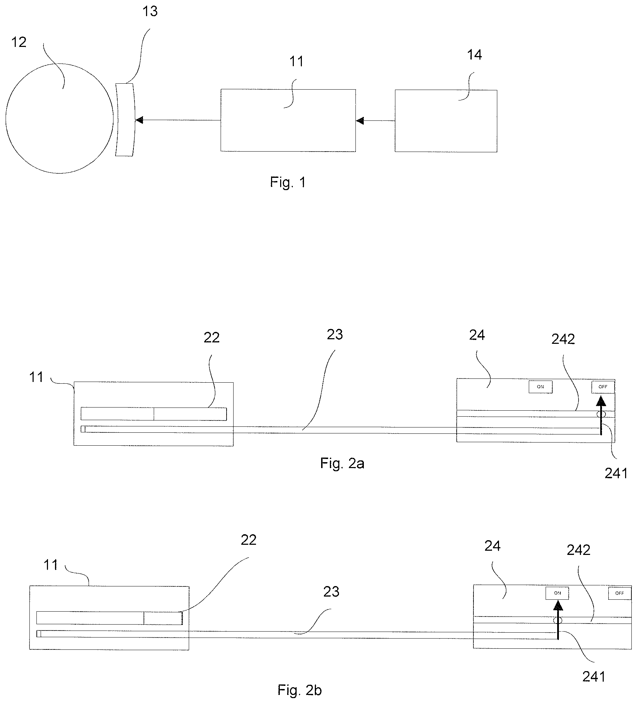

Appended Fig. 1 illustrates a simple layout of a known parking brake system. The brake system comprises a brake transmitter 11 which applies braking force onto a wheel 12, via brake shoes or brake blocks 13, by means of a brake actuator 14, such as a mechanical means applying force on the brake transmitter.

Appended Figs 2a-2b illustrate such a brake indicator for such a construction in a non-braked mode. The brake indicator is connected to a parking brake transmitter 11, comprising an actuator spring 22. The parking brake transmitter 11 is arranged to move in its longitudinal direction (left and right in Fig. 2b) e.g. by means of a mechanical means applying a mechanical force (not shown). When the mechanical means forces the parking brake transmitter 11 to the left, the parking brake transmitter 11 evidently applies a braking force against the brake blocks which are arranged adjacently to the wheels. The actuator spring 22 is arranged in the brake transmitter 11 in order to enable a braking force towards the brake blocks of the rail vehicle, when the brake blocks are arranged to move along the rail vehicle wheel as mentioned above. Hence, when the length displacement is maximal in longitudinal direction the actuator spring 22 has been compressed. When the rail vehicle is loaded, the brake blocks move along the rail vehicle wheel towards the lowermost portion of the rail vehicle wheels. When this occurs the distance between the brake blocks and the mechanical means is extended, and if no actuator spring 22 is available, the amount of braking force applied to the brake blocks decreases, since the length displacement of the brake transmitter is at its fixed value. However, by utilizing an actuator spring 22 the required extra length displacement is compensated by the extension of the actuator spring 22, thereby enabling braking force during extension of the actuator spring 22, when the braking blocks move along the rail vehicle wheel. Hence, the actuator spring 22 is utilized for applying a braking force on the braking blocks, even when no further length displacement of the brake transmitter 11 is available. The brake transmitter is attached to a rigid indicator bar 23. The brake indicator further comprises a brake indicator arrangement 24, fixedly mounted to the vehicle construction, and having an indicator 241 which is slidably mounted in a recess 242 in the brake indicator arrangement 24. The indicator 241 is attached to the other end of the indicator bar 23. Hence, when the parking brake transmitter 11 is moved longitudinally, e.g. by means of the mechanical means, the indicator 241 moves simultaneously in the recess 242 in the brake indicator arrangement 24. An ON and OFF tag is arranged on the brake indicator arrangement 24 to visualize the braked and non-braked mode, respectively. Fig. 2b illustrates the brake indicator in a braked mode in which the parking brake transmitter has been moved longitudinally to the left, thus forcing the indicator 242 to the ON position.

However, for the solution in Fig. 2a and Fig. 2b there is a risk that the parking brake force is too high or too low since it is only the length displacement that is measured. No actual measurement of the braking force is provided. Hence, should the braking force be too high there is a risk of damaging the brake equipment. On the other hand, there is also a risk that not enough braking force is applied since no braking force is measured.

Thus, a new parking brake indicator system and device allowing for increased reliability and safety would be advantageous.

### Summary

Accordingly, the present invention seeks to mitigate, alleviate or eliminate one or more of the above-identified deficiencies in the art and disadvantages singly or in any combination and solves at least the above mentioned problems by providing a parking brake indicator system and a rail vehicle according to appended claims 1 and 15, respectively. Preferred embodiments are defined in the appended dependent claims 2-14.

An object is to provide a parking brake indicator system which indicates the actual applied braking force towards the brake system of a rail vehicle.

According to a first aspect, a parking brake indicator system for a rail vehicle is provided. The parking brake indicator system comprises a movably arranged parking brake transmitter for applying a braking force towards the brake system of a rail vehicle, the parking brake transmitter having provided therein a resilient member which is compressed, when the parking brake transmitter transmits a brake force against a wheel or brake disc of the rail vehicle. The parking brake indicator system further comprises a brake indicator arrangement connected to the resilient member, wherein the brake indicator arrangement is configured to indicate when the actual applied braking force of the parking brake transmitter towards the braking system is at a predetermined magnitude and to allow a possibly higher force to be accommodated by the resilient member.

According to a second aspect, a parking brake indicator device for connection to a parking brake indicator system is provided. The parking brake indicator device comprises a brake indicator arrangement for connection to a resilient member of a brake transmitter, wherein the brake indicator arrangement is configured to indicate when the actual applied braking force of the parking brake transmitter towards the braking system is at a predetermined magnitude and to allow a possibly higher force to be accomodated by the resilient member.

### Brief Description of the Drawings

These and other aspects, features and advantages of which the invention is capable will be apparent and elucidated from the following description of embodiments of the present invention, reference being made to the accompanying drawings, in which
Fig. 1 is a schematic illustration of a known parking brake system;
Fig. 2a is a schematic illustration of a known brake indicator in a non-braked mode;
Fig. 2b is a schematic illustration of a known brake indicator in a braked mode;
Fig. 3a is a schematic illustration of a brake indicator system according to a first embodiment when no braking force is applied between the brake blocks and rail vehicle wheel;
Fig. 3b is a schematic illustration of a brake indicator system according to a first embodiment during application when no braking force is applied between the brake blocks and rail vehicle wheel;
Fig. 3c is a schematic illustration of a brake indicator system according to a first embodiment during building up of braking force between the brake blocks and rail vehicle wheel;
Fig. 3d is a schematic illustration of a brake indicator system according to a first embodiment when full braking force is applied between the brake blocks and rail vehicle wheel;
Fig. 4 is a schematic illustration of a brake indicator according to a first embodiment in a non-braked mode;
Fig. 5a is a schematic illustration of a brake indicator system according to a second embodiment when no braking force is applied between the brake blocks and rail vehicle wheel;
Fig. 5b is a schematic illustration of a brake indicator system according to a second embodiment during application when no braking force is applied between the brake blocks and rail vehicle wheel;
Fig. 5c is a schematic illustration of a brake indicator system according to a second embodiment during building up of braking force between the brake blocks and rail vehicle wheel;
Fig. 5d is a schematic illustration of a brake indicator system according to a second embodiment when full braking force is applied between the brake blocks and rail vehicle wheel;
Fig. 6 is a schematic illustration of a brake indicator system according to a second embodiment mounted to a rail vehicle;
Fig. 7a is a schematic illustration of a brake indicator system according to a third embodiment when no braking force is applied between the brake blocks and rail vehicle wheel;
Fig. 7b is a schematic illustration of a brake indicator system according to a third embodiment during building up of braking force between the brake blocks and rail vehicle wheel;
Fig. 7c is a schematic illustration of a brake indicator system according to a third embodiment when full braking force is applied between the brake blocks and rail vehicle wheel;
Fig. 8a is a schematic illustration of a parking brake indicator device according to a fourth embodiment when no braking force is applied;
Fig. 8b is a schematic illustration of a parking brake indicator device according to a fourth embodiment during building up of braking force between the brake blocks and rail vehicle wheel; and
Fig. 8c is a schematic illustration of a parking brake indicator device according to a fourth embodiment when full braking force is applied.

### Description of Embodiments

Several embodiments of the present invention will be described in more detail below with reference to the accompanying drawings in order for those skilled in the art to be able to carry out the invention. The invention may, however, be embodied in many different forms and should not be construed as limited to the embodiments set forth herein. Rather, these embodiments are provided so that this disclosure will be thorough and complete, and will fully convey the scope of the invention to those skilled in the art. The embodiments do not limit the invention, but the invention is only limited by the appended patent claims. Furthermore, the terminology used in the detailed description of the particular embodiments illustrated in the accompanying drawings is not intended to be limiting of the invention.

The following description focuses on embodiments applicable to a parking brake indicator system.

An idea of the present invention is to provide a parking brake indicator system and device which takes into account only the actual braking force applied on the rail vehicle wheels or discs.

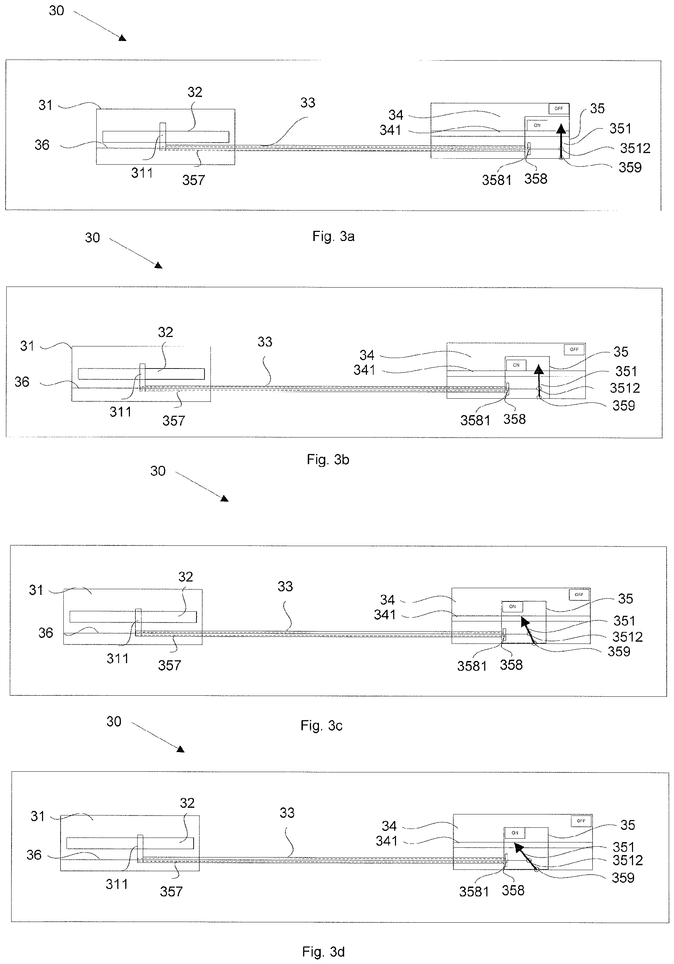

In a first embodiment, according to Figs. 3a to 3d, a parking brake indicator system 30 is provided. Figs. 3a to 3b illustrates the parking brake indicator system when no braking force is applied. Figs. 3c to 3d illustrate the parking brake indicator system at different applied braking forces, and in Fig. 3d a suitable maximum braking force is indicated by a brake indicator 35.

The parking brake indicator system 30 comprises a parking brake transmitter 31, which transfers force from e.g. an air cylinder or by mechanical means (not shown) towards the brake system connected to the rail vehicle wheel or disc (not shown). The parking brake transmitter 31 comprises a resilient member 32, such as a spring, attached at one end to the housing of the parking brake transmitter 31 and at the other end to the end of a rigid indicator tube 33. The other end of the indicator tube 33 is attached to an indicator panel 35, which is visually accessible from the outside of the rail vehicle. The indicator panel 35 is slidably mounted into a recess 341 of a brake indicator arrangement 34 which is fixedly mounted in the rail vehicle construction. Thus, the brake indicator panel 35 follows the movement of the parking brake transmitter 31 as well as the compression and extension of the resilient member 32. It is of great importance that the indicator tube is directly connected to the end of the resilient member 32, since this enables the indicator panel 35 to move in relation to the brake indicator arrangement 34, and thus the movement of the indicator panel 35 in relation to the brake indicator arrangement 34 both depends on the compression level of the resilient member 32 and the length displacement of the brake transmitter 31. Since a wire 36 in the indicator tube 33 is fixated to the brake transmitter 31 the indicator panel 35 also moves along with the length displacement of the brake transmitter 31. When the braking force is larger than the spring force of the resilient member 32, the brake indicator 351 starts to rotate, thereby indicating the compression of the resilient member 32, which in turn indicates the applied braking force. Hence, the brake indicator 351 only indicates the braking force applied on the brake system of the rail vehicle.

The resilient member 32 may thus be selected such that its spring force is in the same magnitude as the desired braking force to be applied towards the braking system of the rail vehicle. The spring force of the resilient member 32 may thus be selected such that it defines the initial braking force level at which the brake blocks start to brake the rail vehicle. When the braking force exceeds this initial braking force level, the resilient member 32 is compressed, whereby the brake indicator 351 rotates further.

The indicator panel 35 comprises a brake indicator 351, which may be an arrow with the base end 359 rotatably mounted to the indicator panel 35, whereby the arrow may rotate around its base end 359. However, any suitable brake indicator may be utilized.

The parking brake indicator system 30 further comprises a wire 36 which is mounted at one end to the parking brake transmitter 31, as illustrated in Figs. 3a to 3d. The wire 36 is preferably made of a sufficiently non-flexible robust material, such as steel. However, any suitable wire may be used. The wire 36 may extend through a channel 357 in the rigid indicator tube 33 and is at the other end mounted to the brake indicator 351, by an attachment knob 3512, at a position above the base end of the brake indicator 351.

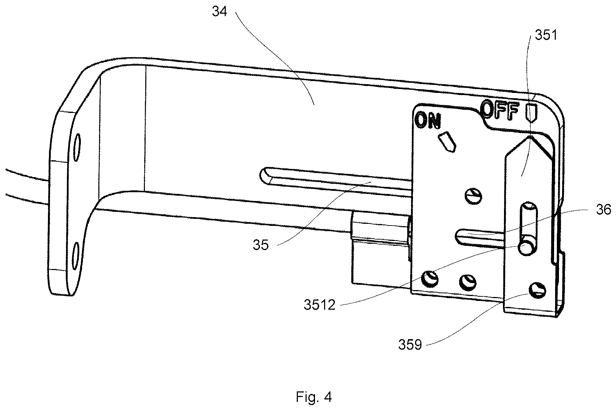

Optionally, the wire may extend through a member 358 protruding from the indicator panel 35, via a hole 358, as is indicated in Fig. 4 which illustrates the brake indicator arrangement in greater detail. The member 358 functions to stabilize and align the wire 36 along the indicator panel 35.

When the braking force exceeds the spring force of the resilient member 32, the resilient member 32 begins to compress. During compression of the resilient member 32, i.e. when the brake transmitter is pushed longitudinally (to the left in Figs. 3a to 3d) the brake transmitter pulls in the wire and thereby rotating the brake indicator 351 around its base end 359, as is illustrated in Figs. 3c and 3d. The rotational direction of the brake indicator 35 then visually indicates the actual braking force being applied by the brake transmitter 31.

The indicator panel 35 may be provided with an "ON" marking or tag, as is illustrated in Figs. 3a to 3d. The "ON" tag in conjunction with the direction of the brake indicator indicates that a suitable braking force is applied. Hence, at a certain braking force level, when the brake indicator 351 points towards the "ON" tag, this indicates that a suitable braking force is applied to the brakes. Exceeding this braking force may have negative impacts on the brake. However, a lower braking force may have the effect that the train starts to roll undesirably. The brake indicator arrangement 34 may be provided with an "OFF" tag or marking to indicate when no braking force is applied. Hence, when no braking force is applied the brake indicator 351 points towards the "OFF" tag on the brake indicator arrangement, as is illustrated in Fig. 3a.

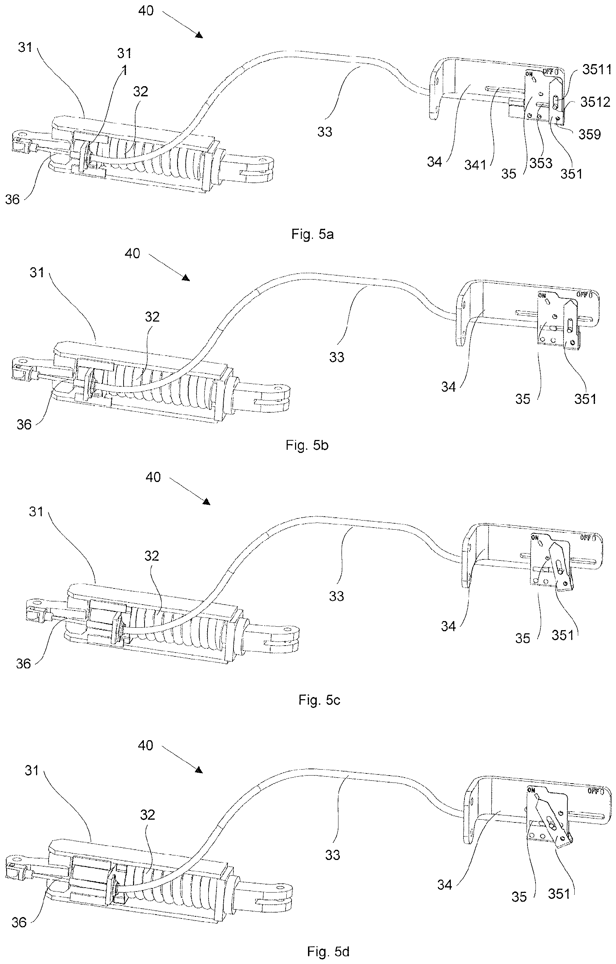

Figs. 5a to 5d respectively illustrate the parking brake indicator system according to the second embodiment in a more practical design.

In Figs. 5a to 5d it may be observed that the brake indicator 351 is provided with a slit 3511 in which an attachment knob 3512 is slidably mounted. The attachment knob 3512 is attached to the wire 36, and may also slide along a recess 353 provided in the indicator panel 35. The function of the attachment knob 3512 is to stabilize the brake indicator 351 to the indicator panel 35, while enabling a constant perpendicular distance between the mounting position of the base end of the brake indicator 351 and the extension of the indicator tube 33, such as to avoid unnecessary bending or wear of the brake indicator 351 in use.

In Figs. 3a to 3d, and Figs. 5a to 5d the indicator tube 33, through which the wire 36 extends, is mounted in a holder 311 which is attached to one end of the resilient member 32. However, the indicator tube 33 may also be directly attached to the resilient member 32 if applicable.

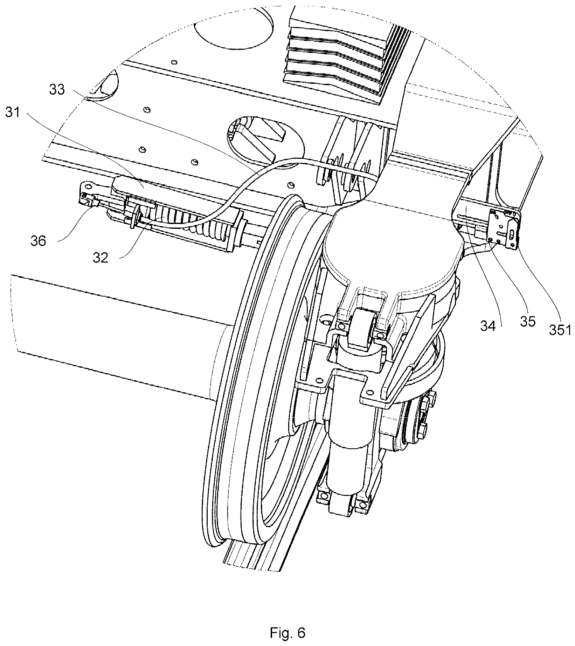

Fig. 6 illustrates the parking brake indicator system mounted to an existing wheel construction. The left side of the brake transmitter 31 is connected to the brake system (not shown) of the rail vehicle, while the right side of the brake transmitter is connected to the air cylinder or mechanical means (not shown).

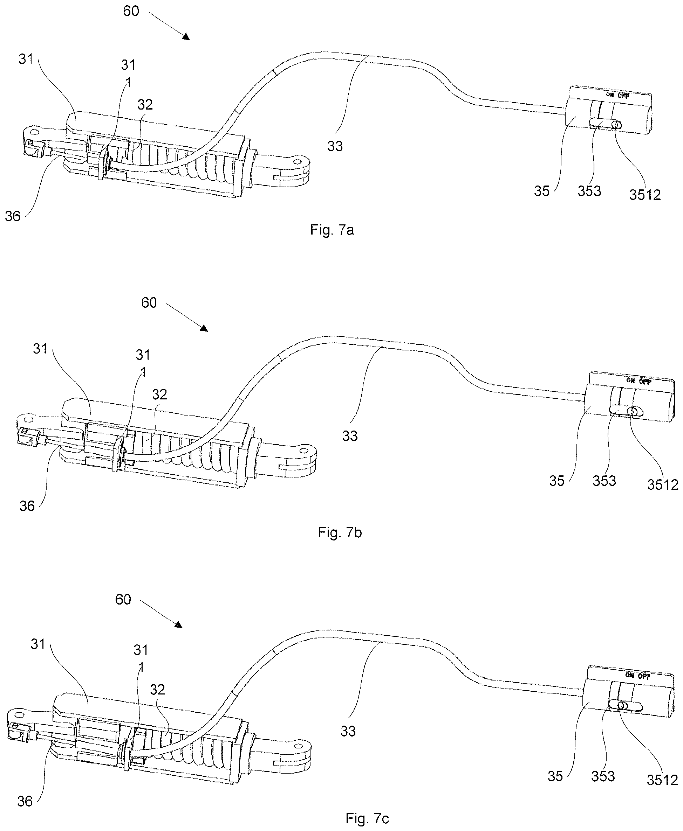

Figs. 7a to 7c illustrate a third embodiment of the parking brake indicator system. Fig. 7a illustrates the parking brake indicator system when no braking force is applied. Fig. 7b illustrates the parking brake indicator system during building up of braking force. Fig. 7c illustrates the parking brake indicator system when a suitable maximum braking force is indicated by the brake indicator 3512. In Figs. 7a to 7c brake indicator arrangement comprises an indicator panel 35 having a recess 353, being parallel to the extension of the indicator tube 33, into which the attachment knob 3512 is slidably mounted. The attachment knob 3512 is attached to the end of the wire 36. The indicator panel is provided with an "ON" tag and an "OFF" tag, and the position of the attachment knob 3512 in relation to the "ON" and "OFF" tags indicates the level of the applied braking force. Hence, the attachment knob 3512 acts as a brake indicator 351 in accordance with above, except for that attachment knob 3512 does not rotate when the braking force exceeds the spring force of the resilient member. However, the functionality is equal, since the attachment knob 3512 is connected to the resilient member 32, whereby the attachment knob will travel towards the "ON" tag during the compression of the resilient member 32.

In the embodiments above the wire is arranged within a channel of the indicator tube 33, but it is equally possible to arrange the wire separately from the parking brake transmitter 31 to the brake indicator 35, when no channel is provided in the rigid indicator tube 33.

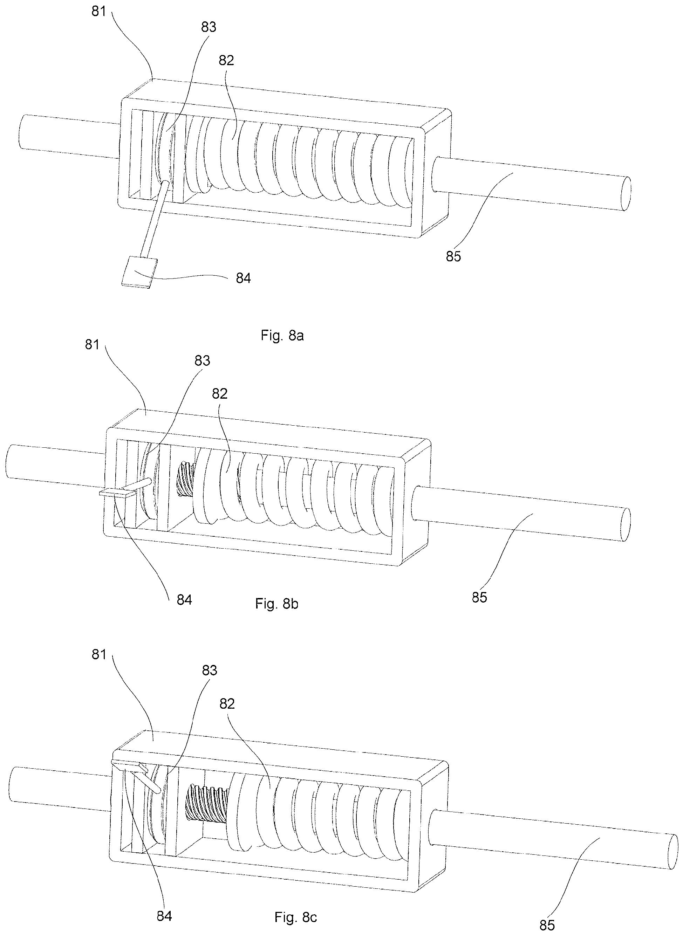

Figs. 8a to 8c illustrate a fourth embodiment of a parking brake transmitter 81 which is arranged to be visually accessible from the outside of the rail vehicle wagon. Similarly to the previous embodiments the parking brake transmitter 81 comprises a resilient member 82, such as a spring. Moreover, the parking brake transmitter 81 comprises an indicator wheel 83 having a threaded hole extended there through, in which threaded hole a brake axis 85 (right side of the brake transmitter) of the parking brake transmitter 81 having a corresponding threaded portion is arranged. Attached to the indicator wheel 83 an indicator lever 84 may be attached. In Figs. 8a to 8c the left side of the brake transmitter 81 may be connected to the brake system (not shown) of the rail vehicle, while the right side of the brake transmitter may be connected to an air cylinder or mechanical means (not shown). When a braking force is building up, by means of the air cylinder or mechanical means, the resilient member 82 starts to compress. The resilient member is at one side fixedly attached to the brake axis 85, as may be observed in Figs. 8b and 8c, which enables the resilient member to be compressed by means of the air cylinder or mechanical means. When the resilient member 82 compresses the brake axis 85 with the threaded portion is moved towards the right in Figs. 8a to 8d, whereby the indicator lever 84 rotates indicating the applied braking force.

Although the present invention has been described above with reference to specific embodiments, it is not intended to be limited to the specific form set forth herein. Rather, the invention is limited only by the accompanying claims and, other embodiments than the specific above are equally possible within the scope of these appended claims.

In the claims, the term "comprises/comprising" does not exclude the presence of other elements or steps. Furthermore, although individually listed, a plurality of means, elements or method steps may be implemented by e.g. a single unit or processor. Additionally, although individual features may be included in different claims, these may possibly advantageously be combined, and the inclusion in different claims does not imply that a combination of features is not feasible and/or advantageous. In addition, singular references do not exclude a plurality. The terms "a", "an", "first", "second" etc do not preclude a plurality. Reference signs in the claims are provided merely as a clarifying example and shall not be construed as limiting the scope of the claims in any way.

## Claims

1. A parking brake indicator system (30, 40, 60, 83, 84) for a rail vehicle, said system comprising a parking brake transmitter (31, 81) and a brake indicator arrangement (34, 35, 351, 352, 83, 84);
wherein said parking brake transmitter (31, 81) is movably arranged for applying a braking force towards the brake system of the rail vehicle, said parking brake transmitter having provided therein a resilient member (32, 82) which is compressed when the parking brake transmitter transmits a brake force against a wheel or brake disc of the rail vehicle;
wherein said brake indicator arrangement (34, 35, 351, 352, 83, 84) is mechanical and connected to the resilient member (32, 82), said brake indicator arrangement being configured to visually indicate when the resilient member (32, 82) is compressed or thus when the actual applied braking force of the parking brake transmitter (31, 81) towards the braking system is at a predetermined magnitude, and to allow a possibly higher force to be accommodated by the resilient member (32,82); and
wherein the parking brake transmitter (31, 81) is fixedly attached to one end of a wire (36) which at its other end is fixedly attached to a brake indicator (351) of an indicator panel (35);
wherein said indicator panel (35) is slidably mounted onto the brake indicator arrangement (34) which is fixedly mounted to the vehicle construction; **and characterised in that** the brake indicator (351) is rotatably mounted at its base end (359) to the indicator panel (35), enabling rotation around its base end (359) in relation to the indicator panel (35).

2. The system according to claim 1, wherein the resilient member (32) is a spring.

3. The system according claim 1 or 2, wherein the brake indicator (351) is made in the form of an arrow.

4. The system according to any one of the preceding claims, wherein the wire (36) is made of a sufficiently non-flexible robust material, such as steel.

5. The system according to any one of the preceding claims, wherein the wire (36) extends through a member (358) attached to the indicator panel (35).

6. The system according to claim 5, wherein the member (358) is provided with a hole (3581) through which the wire (36) extends towards the brake indicator (351).

7. The system according to any one of the preceding claims, wherein the indicator panel (35) is provided with an "ON" marking or "OFF" marking.

8. The system according to any one of the preceding claims, wherein the brake indicator (351) or the indicator panel (35) is provided with a slit (3511) in which an attachment knob (3512) is slidably mounted, and wherein the attachment knob (3512) is attached to the wire (36).

9. The system according to claim 8, wherein the attachment knob (3512) is slidably attached to a recess (353) provided in the indicator panel (35).

10. The system according to any one of the preceding claims, wherein the indicator panel (35) is slidably arranged to the brake indicator arrangement (34) by means of a brake indicator recess (341).

11. The system according to any one of the preceding claims, wherein the wire (36) is attached to the parking brake transmitter (31) by means of a holder (311) attached to one end of the resilient member (32).

12. The system according to claim 9, wherein the recess (353) is essentially parallel to the extension of an indicator tube (33) into which the attachment knob (3512) is slidably mounted.

13. The system according to claim 12, wherein the wire (36) extends from the parking brake transmitter (31) to the brake indicator (351) through a channel (357) within the indicator tube (33).

14. The system according to claim 1, wherein the parking brake transmitter (81) comprises a brake shaft (85), and a parking brake indicator (83, 84) is connected to the brake shaft (85) by means of a threaded portion corresponding to a threaded portion of the brake shaft (85), such that when the brake shaft (85) is moved in a direction along its length the brake indicator (83, 84) is rotated around the brake shaft (85) to indicate a braking force, wherein the parking brake indicator device (83, 84) preferably comprises an indicator wheel (83) or an indicator lever (84).

15. A rail vehicle comprising a parking brake indicator system as claimed in any one of the preceding claims.

## Patentansprüche

1. Feststellbremsenanzeigesystem (30, 40, 60, 83, 84) für ein Schienenfahrzeug, wobei das System einen Feststellbremsenübertrager (31, 81) und eine Bremsanzeigeanordnung (34, 35, 351, 352, 83, 84) aufweist;
wobei der Feststellbremsenübertrager (31, 81) zum Aufbringen einer Bremskraft in Richtung des Bremssystems des Schienenfahrzeugs beweglich angeordnet ist, wobei in dem Feststellbremsenübertrager ein federnd nachgiebiges Bauteil (32, 82) vorhanden ist, welches zusammengedrückt wird, wenn der Feststellbremsenübertrager eine Bremskraft an ein Rad oder eine Bremsscheibe des Schienenfahrzeugs überträgt;
wobei die Bremsanzeigeanordnung (34, 35, 351, 352, 83, 84) mechanisch ist und mit dem federnd nachgiebigen Bauteil (32, 82) verbunden ist, wobei die Bremsanzeigeanordnung dazu eingerichtet ist, visuell anzuzeigen, wenn das federnd nachgiebige Bauteil (32, 82) zusammengedrückt ist oder wenn somit die tatsächlich aufgebrachte Bremskraft des Feststellbremsenübertragers (31, 81) in Richtung des Bremssystems eine vorbestimmte Größe hat, und zu erlauben, dass das federnd nachgiebige Bauteil (32, 82) eine möglicherweise größere Kraft aufnehmen kann;
wobei der Feststellbremsenübertrager (31, 81) fest an einem Ende eines Drahts (36) angebracht ist, der an seinem anderen Ende fest an einem Bremsanzeiger (351) eines Anzeigefelds (35) angebracht ist; und
wobei das Anzeigefeld (35) verschiebbar auf der Bremsanzeigeanordnung (34) angebracht ist, die feststehend an dem Fahrzeugaufbau befestigt ist;
**dadurch gekennzeichnet, dass** der Bremsanzeiger (351) an seinem Fußende (359) drehbar an dem Anzeigefeld (35) angebracht ist, eine Drehung um sein Fußende (359) relativ zum Anzeigefeld (35) gestattend.

2. System nach Anspruch 1, wobei das federnd nachgiebige Bauteil (32) eine Feder ist.

3. System nach Anspruch 1 oder 2, wobei der Bremsanzeiger (351) in Gestalt eines Pfeils ausgeführt ist.

4. System nach einem der vorhergehenden Ansprüche, wobei der Draht (36) aus einem ausreichend unflexiblen, robusten Material wie beispielsweise Stahl besteht.

5. System nach einem der vorhergehenden Ansprüche, wobei der Draht (36) durch ein an dem Anzeigefeld (35) angebrachtes Element (358) verläuft.

6. System nach Anspruch 5, wobei das Element (358) mit einer Öffnung (3581) versehen ist, durch die sich der Draht (36) in Richtung des Bremsanzeigers (351) erstreckt.

7. System nach einem der vorhergehenden Ansprüche, wobei das Anzeigefeld (35) mit einer "EIN" Markierung oder "AUS" Markierung versehen ist.

8. System nach einem der vorhergehenden Ansprüche, wobei der Bremsanzeiger (351) oder das Anzeigefeld (35) mit einem Schlitz (3511) versehen ist, in dem ein Mitnehmerknopf (3512) verschiebbar angebracht ist, wobei der Mitnehmerknopf (3512) an dem Draht (36) befestigt ist.

9. System nach Anspruch 8, wobei der Mitnehmerknopf (3512) verschiebbar an einer in dem Anzeigefeld (35) vorhandenen Ausnehmung (353) angebracht ist.

10. System nach einem der vorhergehenden Ansprüche, wobei das Anzeigefeld (35) mittels einer Bremsanzeigeaussparung (341) verschiebbar an der Bremsanzeigeanordnung (34) angeordnet ist.

11. System nach einem der vorhergehenden Ansprüche, wobei der Draht (36) an dem Feststellbremsenübertrager (31) angebracht ist mittels eines Halters (311), der an einem Ende des federnd nachgiebigen Bauteils (32) angebracht ist.

12. System nach Anspruch 9, wobei die Ausnehmung (353) im Wesentlichen parallel zur Erstreckung eines Anzeigerohrs (33) ist, in dem der Mitnehmerknopf (3512) verschiebbar montiert ist.

13. System nach Anspruch 12, wobei der Draht (36) von dem Feststellbremsenübertrager (31) durch einen Kanal (357) innerhalb des Anzeigerohrs (33) zum Bremsanzeiger (351) verläuft.

14. System nach Anspruch 1, wobei der Feststellbremsenübertrager (81) eine Bremswelle (85) aufweist und ein Feststellbremsenanzeiger (83, 84) mittels eines Gewindeabschnitts mit der Bremswelle (85) verbunden ist, der einem Gewindeabschnitt der Bremswelle (85) entspricht, so dass dann, wenn die Bremswelle (85) in einer Richtung längs ihrer Länge bewegt wird, der Bremsanzeiger (83, 84) um die Bremswelle (85) gedreht wird, um eine Bremskraft anzuzeigen, wobei die Feststellbremsenanzeigeeinrichtung (83, 84) vorzugsweise ein Anzeigerad (83) oder einen Anzeigehebel (84) umfasst.

15. Schienenfahrzeug mit einem Feststellbremsenanzeigesystem nach einem der vorhergehenden Ansprüche.

## Revendications

1. Système d'indicateur de frein de stationnement (30, 40, 60, 83, 84) pour un véhicule ferroviaire, ledit système comprenant un élément de transmission de frein de stationnement (31, 81) et un agencement d'indicateur de frein (34, 35, 351, 352, 83, 84);
dans lequel ledit élément de transmission de frein de stationnement (31, 81) est agencé de manière mobile pour appliquer une force de freinage vers le système de frein du véhicule ferroviaire, ledit élément de transmission de frein de stationnement comprenant dans celui-ci un élément élastique (32, 82) qui est comprimé lorsque l'élément de transmission de frein de stationnement transmet une force de freinage à une roue ou à un disque de frein du véhicule ferroviaire;
dans lequel ledit agencement d'indicateur de frein (34, 35, 351, 352, 83, 84) est mécanique et relié à l'élément élastique (32, 82), ledit agencement d'indicateur de frein étant configuré pour indiquer visuellement quand l'élément élastique (32, 82) est comprimé ou ainsi quand la force de freinage appliquée réelle de l'élément de transmission de frein de stationnement (31, 81) vers le système de freinage est à une amplitude prédéterminée, et pour permettre la réception d'une force éventuellement plus grande par l'élément élastique (32, 82);
dans lequel l'élément de transmission de frein de stationnement (31, 81) est attaché fixement à une extrémité d'un fil (36) qui est, à son autre extrémité, attaché fixement à un indicateur de frein (351) d'un panneau d'indicateur (35); et
dans lequel ledit panneau d'indicateur (35) est monté de manière coulissante sur l'agencement d'indicateur de frein (34) qui est monté fixement sur la construction de véhicule; **caractérisé en ce que** l'indicateur de frein (351) est monté en rotation à son extrémité de base (359) sur le panneau d'indicateur (35), permettant la rotation autour de son extrémité de base (359) par rapport au panneau d'indicateur (35).

2. Système selon la revendication 1, dans lequel l'élément élastique (32) est un ressort.

3. Système selon la revendication 1 ou 2, dans lequel l'indicateur de frein (351) est réalisé sous la forme d'une flèche.

4. Système selon l'une quelconque des revendications précédentes, dans lequel le fil (36) est constitué d'un matériau robuste suffisamment non flexible, tel que de l'acier.

5. Système selon l'une quelconque des revendications précédentes, dans lequel le fil (36) s'étend à travers un élément (358) attaché au panneau d'indicateur (35).

6. Système selon la revendication 5, dans lequel l'élément (358) est pourvu d'un trou (3581) à travers lequel le fil (36) s'étend vers l'indicateur de frein (351).

7. Système selon l'une quelconque des revendications précédentes, dans lequel le panneau d'indicateur (35) est pourvu d'un marquage « ON » ou d'un marquage « OFF ».

8. Système selon l'une quelconque des revendications précédentes, dans lequel l'indicateur de frein (351) ou le panneau d'indicateur (35) est pourvu d'une fente (3511) dans laquelle un bouton de fixation (3512) est monté de manière coulissante, et dans lequel le bouton de fixation (3512) est attaché au fil (36).

9. Système selon la revendication 8, dans lequel le bouton de fixation (3512) est attaché de manière coulissante à un évidement (353) prévu dans le panneau d'indicateur (35).

10. Système selon l'une quelconque des revendications précédentes, dans lequel le panneau d'indicateur (35) est agencé de manière coulissante sur l'agencement d'indicateur de frein (34) au moyen d'un évidement d'indicateur de frein (341).

11. Système selon l'une quelconque des revendications précédentes, dans lequel le fil (36) est attaché à l'élément de transmission de frein de stationnement (31) au moyen d'un support (311) attaché à une extrémité de l'élément élastique (32).

12. Système selon la revendication 9, dans lequel l'évidement (353) est essentiellement parallèle à l'extension d'un tube d'indicateur (33) dans lequel le bouton de fixation (3512) est monté de manière coulissante.

13. Système selon la revendication 12, dans lequel le fil (36) s'étend de l'élément de transmission de frein de stationnement (31) jusqu'à l'indicateur de frein (351) à travers un canal (357) dans le tube d'indicateur (33).

14. Système selon la revendication 1, dans lequel l'élément de transmission de frein de stationnement (81) comprend un arbre de frein (85), et un indicateur de frein de stationnement (83, 84) est relié à l'arbre de frein (85) au moyen d'une partie filetée correspondant à une partie filetée de l'arbre de frein (85), de sorte que, lorsque l'arbre de frein (85) est déplacé dans une direction le long de sa longueur, l'indicateur de frein (83, 84) est tourné autour de l'arbre de frein (85) pour indiquer une force de freinage, dans lequel le dispositif d'indication de frein de stationnement (83, 84) comprend de préférence une roue d'indicateur (83) ou un levier d'indicateur (84).

15. Véhicule ferroviaire comprenant un système d'indicateur de frein de stationnement selon l'une quelconque des revendications précédentes.
